# EUROPÄISCHE PATENTSCHRIFT

(11) **EP 1 439 446 B1**
(45) Veröffentlichungstag und Bekanntmachung des Hinweises auf die Patenterteilung: **29.03.2006**
(21) Anmeldenummer: 03000811.4
(22) Anmeldetag: 14.01.2003
(51) Int. Cl.: G06F 1/00

(54) **Verfahren zum Erweitern eines Programms um eine Kopierschutzfunktion**
Method for extending a program through a copy protection function
Méthode d'extension d'un programme par une fonction de protection contre la copie

(43) Veröffentlichungstag der Anmeldung: 21.07.2004
(73) Patentinhaber: Aladdin Knowledge Systems GmbH& Co. KG, 82110 Germering (DE)
(72) Erfinder: Jascau, Adrian, 81476 München (DE); Lange, Andreas, 81829 München (DE)
(74) Vertreter: Geyer, Fehners & Partner

(56) Entgegenhaltungen:
- EP-A- 0 175 557
- US-A- 5 109 413
- US-A- 5 630 057
- US-A- 5 754 646

## Beschreibung

Die Erfindung bezieht sich auf ein Verfahren zum Erweitern eines Programms, das auf einem eine Kopierschutzeinheit aufweisenden Computersystem zu installieren ist, um eine Kopierschutzfunktion, gemäß dem Oberbegriff des Anspruchs 1.

Um ein Programm gegen unberechtigte Benutzung zu schützen, wird das Programm vom Software-Hersteller häufig so gestaltet, daß es auf dem Computersystem nur ausführbar ist, wenn das Computersystem eine Kopierschutzeinheit aufweist. Eine solche Kopierschutzeinheit ist z.B. eine Hardware-Einheit, die häufig als Dongle bezeichnet wird und die über eine Schnittstelle mit dem Computersystem verbunden ist.

Der Dongle überprüft beispielsweise bei Aufruf des Programms, ob ein im Dongle abgelegter Lizenzschlüssel mit dem Lizenzschlüssel im Programm übereinstimmt. Wenn dies der Fall ist, liegt die Laufberechtigung vor und wird das Programm, das häufig in teilweise verschlüsselter Form vorliegt, entschlüsselt, so daß es ausgeführt werden kann.

Ein Nachteil bei dieser Vorgehensweise besteht darin, daß nach der Entschlüsselung durch das Dongle Klartext-Daten im Computersystem vorhanden sind, die zum Anfertigen von Programmkopien, die ohne Dongle lauffähig sind, und zur Analyse des Programms verwendet werden können.

Die EP 0 175 557 A1 beschreibt ein Computersystem, bei dem eine Hauptprozessoreinheit mit einer Vorrichtung verbunden ist, die ihrerseits einen Prozessor und einen Speicher enthält. In der Vorrichtung sind Teile des Computerprogramms dauerhaft gespeichert. Diese Teile fehlen in dem Teil des Computerprogramms, das für die Hauptprozessoreinheit bestimmt ist, und diese Teile werden auch nie zur Hauptprozessoreinheit übertragen, so daß sie von einem Dritten nicht gelesen werden können.

Die US 5,754,646 beschreibt ein Verfahren zum Schutz öffentlich vertriebener Software, bei der die Software teilweise im Computer und teilweise in einem sogenannten Hardwarekey gespeichert wird. Der in dem Hardwarekey gespeicherte Teil wird gelöscht, wenn die Spannungsversorgung abgeschaltet wird oder wenn die Ausführung der Software beendet wird. Bei erneuter Ausführung der Software muß der Teil für den Hardwarekey nachgeladen werden. Dies wird nur durchgeführt, wenn eine entsprechende Berechtigung vorliegt.

Die US 5,109,413 beschreibt einen Software-Schutzmechanismus, bei dem das Recht zur Ausführung der Software von der Software selbst getrennt ist. Dabei kann das Recht zur Ausführung der Software unabhängig von der Software übertragen werden.

In der US 5,630,057 wird ein Modul beschrieben, das dazu dient, eine sichere Ausführung von Programmen zu gewährleisten, wobei diese Programme von außerhalb des Moduls nicht lesbar sind.

Ausgehend hiervon ist es Aufgabe der Erfindung, ein Verfahren zum Erweitem eines auf einem eine Kopierschutzeinheit aufweisenden Computersystem zu installierenden Programms um eine Kopierschutzfunktion gemäß dem Oberbegriff des Anspruchs 1 bereit zu stellen, mit dem in einfacher Weise ein verbesserter Schutz des Programms gegen Mißbrauch verwirklicht werden kann.

Erfindungsgemäß wird die Aufgabe gelöst durch ein Verfahren zum Erweitern eines auf einem eine Kopierschutzeinheit aufweisenden Computersystem zu installierenden Programms um eine Kopierschutzfunktion gemäß dem Oberbegriff des Anspruchs 1, wobei das Verfahren dadurch gekennzeichnet ist, daß im Umsetzungsschritt eine Programmanweisung vorgesehen wird, die bei Ausführung einen Aufruf der Kopierschutzeinheit mit einer Übergabe der zur Ausführung des Entscheidungsabschnitts notwendigen Daten und einer auf die Daten anzuwendender Verarbeitungsvorschrift an die Kopierschutzeinheit bewirkt.

Es wird somit in einfacher Weise das Auslagern des Entscheidungsabschnittes in die Kopierschutzeinheit realisierbar, da die im Umsetzungsschritt vorgesehene Programmanweisung bei Ausführung einen Aufruf (bzw. eine Aktivierung) der Kopierschutzeinheit mit einer Übergabe der zur Ausführung des Entscheidungsabschnittes notwendigen Daten und einer auf die Daten anzuwendenden Verarbeitungsvorschrift (bzw. Funktion) an die Kopierschutzeinheit bewirkt.

Bei den Daten kann es sich um Parameter, eine oder mehrere Programmadressen, die nach aktuellem Laufzustand des Programms bei Ausführung des Entscheidungsabschnittes in der Kopierschutzeinrichtung ausgewählt werden, handeln.

Durch die Umsetzung des Entscheidungsabschnitts in ausschließlich in der Kopierschutzeinheit ausführbarem Code wird die Ausführung des Entscheidungsabschnitts praktisch in die Kopierschutzeinheit ausgelagert, wodurch sichergestellt wird, daß das Programm auf dem Computersystem nur dann ausgeführt werden kann, wenn das Computersystem die Kopierschutzeinheit aufweist. Dadurch wird die Ausführung einer illegal angefertigten Programmkopie aur einem Computersystem, die die Kopierschutzeinheit nicht aufweist, verhindert.

Des weiteren wird eine Analyse des Programms erschwert, da der ausgelagerte Entscheidungsabschnitt ohne genaue Kenntnis des Aufbaus der Kopierschutzeinheit nicht verständlich ist. Dabei ist zu berücksichtigen, daß der Aufbau der Kopierschutzeinheit in der Regel nicht öffentlich bekannt ist, da mit der Kopierschutzeinheit ein illegales Kopieren und Benutzen des Programms verhindert werden soll.

Die Kopierschutzeinheit, die beispielsweise ein Dongle sein kann, enthält bevorzugt einen Controller, einen Speicher sowie eine Eingabe-/Ausgabeeinheit und ist insbesondere nicht alleine, sondern nur zusammen mit dem bzw. einem Computersystem sinnvoll einsetzbar. Die Kopierschutzeinheit kann sich jedoch auch auf dem Computersystem selbst oder einem anderen Computersystem befinden. Dabei kann es sich insbesondere um einen reinen Softwarebereich (beispielsweise des Computersystems, auf dem das Programm zu installieren ist) handeln, der z. B. gegen Crackerangriffe geschützt ist und/oder nicht direkt kopierbar ist.

Ein besonderer Vorteil des erfindungsgemäßen Verfahrens liegt darin, daß ein Entscheidungsabschnitt in die Kopierschutzeinheit ausgelagert wird. Da ein Programm im wesentlichen Berechnungs- und Entscheidungsabschnitte (insbesondere auf Maschinencode-Ebene) umfaßt und die Entscheidungsabschnitte häufig eine Verzweigung des Programmablaufs bewirken, sind Entscheidungsabschnitte zum Verständnis der Programmstruktur sehr wichtig. Wenn nun ein oder mehrere Entscheidungsabschnitte in der Kopierschutzeinheit selbst ausgeführt werden, sind diese einer Analyse nicht mehr zugänglich, wodurch der Zusammenhang und die Logik der Anweisungsabfolge des Programms verloren geht und dadurch die Analyse des Programms insgesamt deutlich erschwert wird.

Ein weiterer Vorteil im gezielten Auslagern des bzw. der Entscheidungsabschnitte besteht darin, daß zur Ausführung des bzw. der Entscheidungsabschnitte in der Kopierschutzeinheit eine vergleichsweise geringe Rechenleistung der Kopierschutzeinheit und eine geringe Datenübertragungskapazität zwischen der Kopierschutzeinheit und dem restlichen Computersystem benötigt werden, so daß die Kopierschutzeinheit mit geringerem Aufwand realisiert werden kann. Ebenso können der Ermittlungs- und der Umsetzungsschritt mit geringem Aufwand realisiert werden und das Laufzeitverhalten eines mittels dem erfindungsgemäßen Verfahren um eine Kopierschutzfunktion erweiterten Programms wird nur gering beeinflußt.

So kann insbesondere schon eine vorhandene Kopierschutzeinheit des Computersystems (wie z.B. ein Dongle) nach Durchführung des efindungsgemäßen Verfahrens bei Ausführung des um die Kopierschutzfunktion erweiterten Programms zweckentfremdet benutzt werden, um den Entscheidungsabschnitt des Programms auszuführen. Die Kopierschutzeinheit wird dabei nicht zu ihrer eigentlich bestimmungsgemäßen Überprüfung des Vorliegens der Laufberechtigung und/oder einer gegebenenfalls notwendigen Ent- und/oder Verschlüsselung von Programmteilen eingesetzt, sondern zur Ausführung eines Teils des Programms selbst. Damit wird die Kopierschutzeinheit genutzt, um damit die durch das Programm zur Verfügung zu stellende Funktionalität zu verwirklichen.

Bei dem in der Kopierschutzeinheit auszuführenden Entscheidungsabschnitt bei Ausführung des Programms handelt es sich also insbesondere um eine andere Funktion als die Funktion zur Überprüfung des Vorliegens der Laufberechtigung des Programms und als die Funktion des Ent- und/oder Verschlüsselns von Programmteilen.

Durch das Auslagern von einem oder mehreren Entscheidungsabschnitten des Programms genügt es somit in vorteilhafter Weise, daß die Kopierschutzeinheit eine deutlich geringere Rechenleistung als die des Computersystems ohne Kopierschutzeinheit aufweist. Auch die Datenübertragungskapazität zwischen dem Computersystem und der Kopierschutzeinheit muß nicht sonderlich hoch sein. So kann die Rechenleistung der Kopierschutzvorrichtung insbesondere um eine, zwei oder mehrere Größenordnungen geringer sein als die des Computersystems. So kann beispielsweise der Controller der Kopierschutzeinheit mit einer Taktfrequenz von einigen kHz getaktet werden, während die Taktfrequenz eines Prozessors des Computersystems im MHz- bis GHz-Bereich liegt. Des weiteren kann die Speicherkapazität der Kopierschutzeinheit lediglich einige hundert Byte betragen im Verhältnis zu einigen MByte für das Computersystem.

Das erfindungsgemäße Computersystem kann ein einzelner Computer, ein Computernetzwerk oder ein anderes programmierbares Gerät sein, mit dem die Programmanweisungen des Programms abgearbeitet werden können. In gleicher Weise kann die Kopierschutzeinheit auch als einzelner Computer, als Computernetzwerk oder als ein anderes programmierbares Gerät ausgebildet sein, mit dem der Code zur Umsetzung des Entscheidungsabschnitts ausführbar ist und das mit dem erfindungsgemäßen Computersystem verbindbar und in diesem Sinne Teil des erfindungsgemäßen Computersystems ist.

Die Kopierschutzeinheit dient insbesondere zur Überprüfung der Laufberechtigung eines Programms, bevorzugt des um die Kopierschutzfunktion zu erweiternden Programms.

Daß der Code zum Umsetzen bzw. Verwirklichen des Entscheidungsabschnitts ausschließlich in der Kopierschutzeinheit ausführbar ist, wird hier so verstanden, daß es sich um Code handelt, der zwar in der Kopierschutzeinheit selbst aber nicht im restlichen Computersystem ausführbar ist. Es kann zwar mehrere Kopierschutzeinheiten geben, in dem der Code ausführbar ist. Bevorzugt ist es jedoch, wenn es nur eine einzige Kopierschutzeinheit gibt, die den Code ausführen kann. Das um die Kopierschutzfunktion erweiterte Programm wird somit an die Kopierschutzeinheit gebunden und ist nur bei Vorhandensein der Kopierschutzeinheit und bei Vorliegen der Laufberechtigung, das bevorzugt von der Kopierschutzeinheit überprüft wird, ausführbar.

Bei dem Entscheidungsabschnitt kann es sich insbesondere um einen Entscheidungsabschnitt handeln, bei dem in Abhängigkeit des aktuellen Laufzustands des ausgeführten Programms entschieden wird, mit welchem von zumindest zwei oder mehreren möglichen Ausführungspfaden das Programm fortgesetzt wird.

Bei der Auslagerung von mehreren Entscheidungsabschnitten hat sich gezeigt, daß schon bei einem geringen Anteil von ausgelagerten Entscheidungsabschnitten eine sehr große Sicherheit gegen einen Mißbrauch des Programms erreicht wird. Der ausgelagerte Anteil, den man beispielsweise durch das Verhältnis von ausgelagerten Programmzeilen (oder Anweisungen) zu den gesamten Programmzeilen (oder Anweisungen) des Programms quantifizieren kann, kann beispielsweise einige Prozent (z. B. 5%) oder mehr betragen.

Insbesondere kann beim erfindungsgemäßen Verfahren der Code bei seiner Ausführung einen (logischen) Vergleich von zwei Datenwerten und in Abhängigkeit des Vergleichsergebnisses die Festlegung der Informationen bewirken. Ein solcher Vergleich ist ohne großen Rechenaufwand durchzuführen, so daß die Ausführungsgeschwindigkeit des Programms nicht merklich abnimmt.

Besonders bevorzugt ist es beim erfindungsgemäßen Verfahren, daß die festgelegte Information eine Programmadresse enthält, an der die Programmausführung fortgesetzt wird. Damit läßt sich die gewünschte Verzweigung bzw. Auswahl des Ausführungspfades, mit dem die Programmausführung fortgesetzt wird, leicht realisieren.

Besonders bevorzugt ist es, daß die bei Ausführung der im Umsetzungsschnitt hinzugefügten Programmanweisung zu übergebenden Daten und zu übergebende Verarbeitungsvorschift verschlüsselt im Programm vorgesehen werden und in der verschlüsselten Form an die Kopierschutzeinheit übergeben werden. Bei Ausführung des um die Kopierschutzfunktion erweiterten Programms wird dann erst in der Kopierschutzeinheit eine Entschlüsselung durchgeführt. Damit wird die Sicherheit gegen Mißbrauch weiter erhöht, so daß selbst bei einem Disassemblieren des Programms nur der Kopierschutzeinheitsaufruf erkennbar ist, nicht jedoch die übergebenen Daten und die gegebenenfalls übergebene Verarbeitungsvorschrift.

Eine besonders bevorzugte Ausgestaltung des erfindungsgemäßen Verfahrens besteht darin, daß im Ermittlungsschritt der Entscheidungsabschnitt anhand seiner Anweisungsabfolge im Programm (bzw. anhand seiner Anweisungsstruktur), die für den Entscheidungsabschnitt typisch ist, ermittelt wird. Dadurch läßt sich sehr gut eine Automatisierung des Verfahrens realisieren.

Besonders vorteilhaft ist es, wenn für jeden Typ von Entscheidungsabschnitten mehrere unterschiedliche Codeumsetzungen, beispielsweise in einer Datenbank, hinterlegt sind. In diesem Fall können, wenn mehrere Entscheidungsabschnitte des gleichen Typs festgestellt werden, diese in unterschiedliche Weise in einen Code umgesetzt werden, der ausschließlich in der Kopierschutzeinheit ausführbar ist. Somit scheinen bei einer Analyse des um die Kopierschutzfunktion erweiterten Programms unterschiedliche Typen von Entscheidungsabschnitten ausgelagert zu sein, da diese ja durch unterschiedliche Codes dargestellt sind. Dies führt zu einer weiteren Erhöhung der Sicherheit gegen Mißbrauch.

Ferner können bei dem erfindungsgemäßen Verfahren der Ermittlungs- und der Umsetzungsschritt mehrmals durchgeführt werden, so daß mehrere Entscheidungsabschnitte ermittelt und mittels ausschließlich in der Kopierschutzeinheit ausführbarem Code umgesetzt werden, wobei die Anzahl der umgesetzten Entscheidungsabschnitte gemäß einer vorgegebenen Programmeigenschaft festgelegt wird. Dabei kann es sich beispielsweise um einen Auslagerungsgrad (ausgelagerte Programmzeilen bzw. -anweisungen im Verhältnis zu den gesamten Programmzeilen bzw. -anweisungen), eine oder mehrere verschiedene auszulagernde Anweisungsstrukturen bzw. -abfolgen und/oder eine voraussichtliche Verringerung der Ausführungsgeschwindigkeit des Programms handeln. In Abhängigkeit der so festgelegten Programmeigenschaft bzw. Vorgabe wird dann die Anzahl der auszulagernden Entscheidungsabschnitte bestimmt und durch ausschließlich in der Kopierschutzeinheit auszuführenden Codes umgesetzt.

Ferner wird eine Erweiterungsvorrichtung zum Erweitem eines Programms, das auf einem eine Kopierschutzeinheit aufweisenden Computersystem zu installieren ist, um eine Kopierschutzfunktion bereitgestellt, wobei die Vorrichtung ein Ermittlungsmodul, das einen Entscheidungsabschnitt des Programms, in dem während der Programmausführung in Abhängigkeit des aktuellen Laufzustands des Programms eine den weiteren Verlauf des Programms beeinflussende Information festgelegt wird, ermittelt, und ein Umsetzungsmodul umfaßt, das den ermittelten Entscheidungsabschnitt mittels ausschließlich in der Kopierschutzeinheit ausführbarem Code darstellt, der bei Programmausführung in der Kopierschutzeinheit ausgeführt wird.

Mit der Erweiterungsvorrichtung läßt sich in vorteilhafter Weise das Programm um eine Kopierschutzfunktion erweitern. Insbesondere werden die im Zusammenhang mit dem erfindungsgemäßen Verfahren beschriebenen Vorteile erreicht.

Die Erweiterungsvorrichtung kann so weitergebildet werden, daß die bevorzugten Ausgestaltungen des erfindungsgemäßen Verfahrens verwirklicht werden.

Ferner wird ein erfindungsgemäßes Computerprogrammprodukt bereitgestellt, das Softwarecode umfaßt, um die Schritte des beschriebenen erfindungsgemäßen Verfahrens (und insbesondere seiner Weiterbildungen) durchzuführen, wenn das Produkt auf einem Computer ausgeführt wird.

In einer vorteilhaften Weiterbildung ist das erfindungsgemäße Computerprogrammprodukt auf einem vom Computer lesbaren Datenträger gespeichert. Als Datenträger kann jedes Medium verwendet werden, von dem das gespeicherte Computerprogramm vom Computer ausgelesen werden kann, wie beispielsweise eine Diskette, eine CD, eine DVD, ein Magnetband, eine Festplatte oder andere nicht flüchtige Speicherelemente.

Die Erfindung wird nachfolgend beispielshalber anhand der Zeichnungen noch näher erläutert. Es zeigen:
- Fig. 1: eine schematische Ansicht eines eine Kopierschutzeinheit aufweisenden Computersystems, und
- Fig. 2: eine schematische Darstellung der Struktur eines um die Kopierschutzfunktion zu erweiternden Programms.

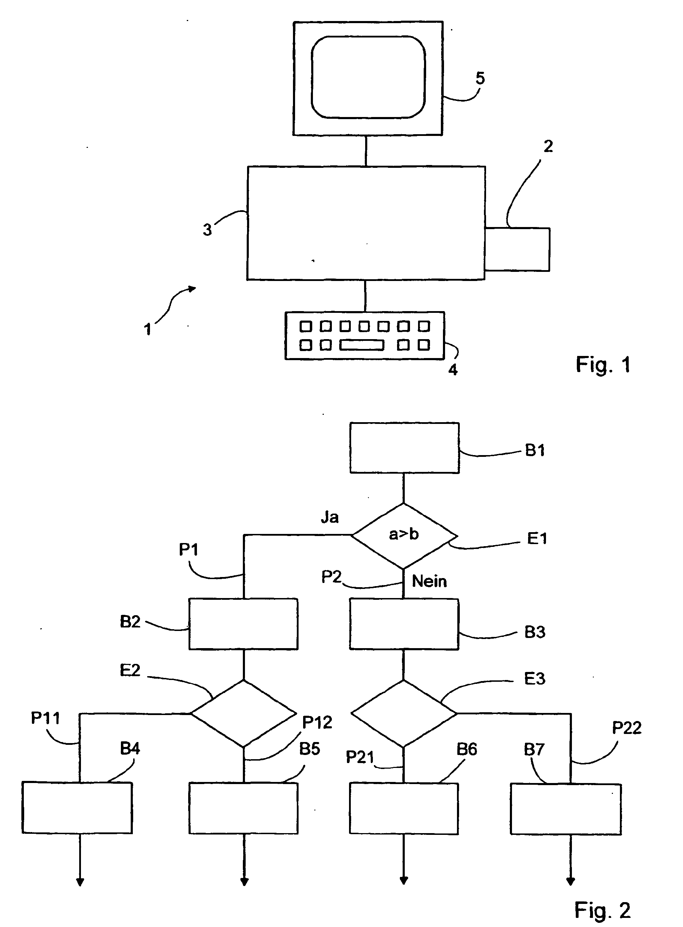

Wie aus Fig. 1 ersichtlich ist, umfaßt das Computersystem einen Computer 1 und eine mit diesem verbundene Kopierschutzeinheit 2. Der Computer 1 enthält einen Rechenabschnitt 3 (mit beispielsweise einen Prozessor, eine Festplatte, weiteren Hardwareelementen sowie einem Betriebssystem), eine Eingabeeinheit 4 (hier beispielsweise eine Tastatur) sowie eine Ausgabeeinheit 5 (z.B. Bildschirm).

Die Kopierschutzeinheit 2 umfaßt ihrerseits einen Controller, einen Speicher, sowie eine Eingabe-/Ausgabeeinheit (alle nicht gezeigt), und ist auf eine Schnittstelle des Computers 1 (hier auf die USB-Schnittstelle; Universal-Serial-Bus Schnittstelle) aufgesteckt. Natürlich kann sie auch auf jede andere Schnittstelle (wie z.B. eine parallele Schnittstelle) des Computers 1 aufgesteckt sein. Die Kopierschutzeinheit 2 ist hier ohne eigene Stromversorgung ausgebildet und wird über die Schnittstelle vom Computer 1 entsprechend mit Energie versorgt.

In Fig. 2 ist schematisch ein Ablaufdiagramm eines Teils des um die Kopierschutzfunktion zu erweiternden Programms dargestellt, wobei die Rechtecke B1, B2, B3, B4, B5, B,6, B7 jeweils für einen Berechnungsabschnitt des Programms stehen, in denen Berechnungen durchzuführen sind. Die Rauten E1, E2 und E3 stehen für Entscheidungsabschnitte, mit denen bei Ausführung des Programms in Abhängigkeit des aktuellen Laufzustands des Programms festgelegt wird, entlang welchem Ausführungspfad P1, P2, P11, P12, P21, P22 die Programmausführung erfolgt.

Beim Entscheidungsabschnitt E1 handelt es sich beispielsweise um einen logischen Vergleich der Werte der Parameter a und b, wobei die Programmausführung mit dem Berechnungsabschnitt B2 fortgesetzt wird (entlang des Ausführungspfades P1), wenn der Wert des Parameters a größer ist als der des Parameters b. Ansonsten wird das Programm mit dem Berechnungsabschnitt B3 fortgesetzt (also entlang des Ausführungspfades P2).

Bei dem erfindungsgemäßen Verfahren wird nun in einem Ermittlungsschritt der Entscheidungsabschnitt E1 ermittelt und danach in einem weiteren Schritt mittels ausschließlich in der Kopierschutzeinheit 2 ausführbarem Code umgesetzt bzw. dargestellt. Wenn das Programm in Maschinencode vorliegt, werden die Anweisungen, die den Entscheidungsabschnitt E1 darstellen, z. B. durch eine Aufruf-Anweisung mit mehreren Argumenten ersetzt. Bei Ausführung des Programms im Computersystem werden, wenn die Aufruf-Anweisung auszuführen ist, ihre Argumente zur Kopierschutzeinheit 2 übertragen. Die Argumente enthalten die Parameter a und b oder deren Werte, die anzuwendende Vergleichsoperation sowie die Programmadressen der Berechnungsabschnitte B2 und B3. Bevorzugt liegen die Argumente natürlich in verschlüsselter Form vor und werden auch so zu der Kopierschutzeinheit übergeben, in der dann die Entschlüsselung durchgeführt wird.

Die Kopierschutzeinheit 2 führt bei Programmausführung den Vergleich der Parameterwerte von a und b durch und gibt als Ergebnis lediglich die Adresse des Berechnungsabschnitts B2 oder B3 aus, so daß das Programm an dieser Stelle durch den Computer 1 fortgeführt werden kann. Da die Kopierschutzeinheit 2 den Entscheidungsabschnitt E1 bzw. den entsprechenden Code in der Regel für den Computer 1 nicht sichtbar durchführt, wird die gewünschte Sicherheit gewonnen.

Die erfindungsgemäßen Schritte des Verfahrens werden bevorzugt in einer Erweiterungsvorrichtung durchgeführt, die im wesentlichen gleich zu dem in Fig. 1 gezeigten Computersystem aufgebaut sein kann. Die Kopierschutzeinheit 2 kann, muß aber nicht vorgesehen sein. Es müssen lediglich die notwendigen Daten vorliegen, um den ausschließlich in den Kopierschutzeinheiten 2 auszuführenden Code erzeugen zu können.

Besonders vorteilhaft ist bei dem efindungsgemäßen Verfahren, wenn man die Entscheidungsabschnitte, die man in ausschließlich in der Kopierschutzeinheit 2 auszuführenden Code umsetzen will, anhand typischer Anweisungsabfolgen der Entscheidungsabschnitte ermittelt und dann in den Code für die Kopierschutzeinheit 2 umsetzt. Diese charakteristischen Anweisungsabfolgen bzw. auch typischen Anweisungen selbst sind auf der Maschinencode-Ebene genau so vorhanden wie bei höheren Programmiersprachen.

Insbesondere kann man auch einen Compiler zum Erzeugen von Maschinencode so erweitern, daß die erfindungsgemäßen Verfahrensschritte durchgeführt werden und dadurch gleich beim Compillieren des Programms die Erweiterung um die Kopierschutzfunktion erfolgt.

Die Kopierschutzeinheit 2 ist in dem beschriebenen Ausführungsbeispiel ein separates Hardware-Element, das mit dem Computersystem verbunden ist. Diese Verbindung kann auch indirekt über Netzwerke oder sonstige zwischengeschaltete Computer erfolgen. Alternativ kann die Kopierschutzeinheit auch im wesentlichen durch Software umgesetzt werden So kann beispielsweise in dem Computer 1 in einem geschützten Bereich, der gegenüber dem restlichen Computer 1 abgeschottet ist, ein entsprechender Prozeß laufen, der bei Ausführung des Programms aufgerufen wird. Dabei werden die notwendigen Daten in gleicher Weise, wie oben beschrieben, übergeben. Insbesondere sind die Daten natürlich verschlüsselt und werden in dem geschützten Bereicht entschlüsselt, ausgeführt und nur das Ergebnis wird dann aus dem geschützten Bereich wieder ausgegeben, so daß die Programmausführung fortgesetzt werden kann. Der geschützte Bereich ist somit nach außen abgeschottet und nicht einsehbar.

Der Prozeß, der in dem geschützten Bereich läuft wird bevorzugt nur ausgeführt, wenn das Vorliegen einer Laufberechtigung festgestellt werden kann. Dies kann auf bekannte Art und Weise erfolgen. Beispielsweise durch den Vergleich eines Lizenzschlüssels mit einem vorgegebenen Lizenzschlüssel. Dies gilt natürlich in gleicher Weise für die oben beschriebene Kopierschutzeinheit 2.

## Patentansprüche

1. Computer-implementiertes Verfahren zum Erweitem eines Programms, das auf einem eine Kopierschutzeinheit(2) aufweisenden computersystem (1) zu installieren ist, um eine Kopierschutzfunktion, wobei das Verfahren folgende Schritte umfaßt
- Ermitteln eines Entscheidungsabschnitts (E1, E2, E3) des Programms, bei dem während der Programmausführung in Abhängigkeit des aktuellen Laufzustands des Programms eine den weiteren Verlauf des Programms beeinflussende Information festgelegt wird, und
- Umsetzen des Entscheidungsabscnnitts (E1, E2, E3) in ausschließlich in der Kopierschutzeinheit (2) ausführbaren Code, der bei Programmausführung in der Kopierschutzeinheit (2) ausgeführt wird,
**dadurch gekennzeichnet, daß** im Umsetzungsschritt eine Programmanweisung vorgesehen wird, die bei Ausführung einen Aufruf der Kopierschutzeinheit (2) mit einer Übergabe der zur Ausführung des Entscheidungsabschnitts (E1, E2, E3) notwendigen Daten und einer auf die Daten anzuwendenden Verarbeitungsvorschrift an die Kopierschulzeinheit (2) bewirkt.

2. Verfahren nach Anspruch 1, bei dem der Code bei seiner Ausführung einen Vergleich von zwei Datenwerten (a, b) und in Abhängigkeit des Vergleichsergebnisses die Festlegung der Information bewirkt.

3. Verfahren nach Anspruch 1 oder 2, bei dem die Information eine Programmadresse enthält, an der die Programmausführung fortgesetzt wird.

4. Verfahren nach einem der Ansprüche 1 bis 3, bei dem die zu übergebenden Daten (a, b) und die zu übergebende Verarbeitungsvorschrift verschlüsselt im Programm vorgesehen werden und bei Programmausführung an die Kopierschutzeinheit (2) verschlüsselt übergeben werden.

5. Verfahren nach einem der obigen Ansprüche, bei dem die Ausführung des Codes in der Kopierschutzeinheit (2) für das restliche Computersystem (1) nicht sichtbar durchgeführt wird.

6. Verfahren nach einem der obigen Ansprüche, bei dem im Ermittlungsschritt der Entscheidungsabschnitt anhand seiner Anweisungsabfolge im Programm ermittelt wird.

7. Verfahren nach einem der obigen Ansprüche, bei dem der Ermittlungs-, und der Umsetzungsschritt mehrmals durchgeführt werden, so daß mehrere Entscheidungsabschnitte (E1, E2, E3) ermittelt und mittels ausschließlich in der Kopierschutzeinheit (2) ausführbarem Code verwirklicht werden, wobei bei Ermittlung von zwei gleichen Typen von Entscheidungsabschnitten (E1, E2, E3) diese durch unterschiedlichen Code in den Umsetzungsschritten umgesetzt werden.

8. Erweiterungsvorrichtung zum Erweitern eines Programms, das auf einem eine Kopierschutzeinheit (2) aufweisenden Computersystem (1) zu installieren ist, um eine Kopierschutzfunktion, wobei die Vorrichtung umfaßt:
- ein Ermittlungsmodul, das einen Entscheidungsabschnitt (E1, E2, E3) des Programms ermittelt, in dem während der Programmausführung in Abhängigkeit des aktuellen Laufzustands des Programms eine den weiteren Verlauf des Programms beeinflussende Information festgelegt wird, und
- ein Umsetzungsmodul, das den ermittelten Entscheidungsabschnitt in (E1, E2, E3) ausschließlich in der Kopierschutzeinheit (2) ausführbaren Code umsetzt, der bei Programmausführung in der Kopierschutzeinheit (2) ausgeführt wird und eine Programmanweisung aufweist, die bei Ausführung einen Aufruf der Kopierschutzeinheit (2) mit einer Übergabe der zur Ausführung des Entscheidungsabschnitts (E1, E2, E3) notwendigen Daten und einer auf die Daten anzuwendenden Verarbeitungsvorschrift an die Kopierschutzeinheit (2) bewirkt.

9. Computerprogrammprodukt, das Softwarecode umfaßt, um die Schritte eines der Verfahrensansprüche 1 bis 7 durchzuführen, wenn das Produkt auf einem Computer ausgeführt wird.

## Claims

1. A computer-implemented method of adding a copy protection function to a programme to be installed on a computer system (1) comprising a copy protection unit (2), said method comprising the following steps:
- determining a decision section (E1, E2, E3) of the programme, wherein information influencing the further course of the programme is defined during execution of the programme, as a function of the current running state of the programme, and
- converting the decision section (E1, E2, E3) into code which is executable exclusively in the copy protection unit (2) and which is executed in the copy protection unit (2) during execution of the programme, **characterised in that** a programme instruction is provided in the conversion step, which programme instruction, when being executed, causes the copy protection unit (2) to be called, including transfer of the data required for execution of the decision section (E1, E2, E3) and of a processing regulation, which is applicable to the data, to the copy protection unit (2).

2. The method as claimed in claim 1, wherein said code, when being executed, effects a comparison of two data values (a, b) and a definition of the information as a function of the result of said comparison.

3. The method as claimed in claim 1 or 2, wherein said information contains a programme address at which execution of the programme is resumed.

4. The method as claimed in any one of claims 1 to 3, wherein the data (a, b) to be transferred and the processing regulation to be transferred are provided in the programme in encoded form and are transferred to the copy protection unit (2) in encoded form during execution of the programme.

5. The method as claimed in any one of the above claims, wherein execution of the code in the copy protection unit (2) is carried out in a manner not visible to the rest of the computer system (1).

6. The method as claimed in any one of the above claims, wherein the decision section is determined during the determining step on the basis of its instruction sequence in the programme.

7. The method as claimed in any one of the above claims, wherein the determination and conversion steps are executed several times, so that several decision sections (E1, E2, E3) are determined and realised by means of code which is executable exclusively in the copy protection unit (2), wherein, if two similar types of decision sections (E1, E2, E3) are determined, these are converted by different codes in the converting steps.

8. An extending device for adding a copy protection function to a programme to be installed on a computer system (1) comprising a copy protection unit (2), said device comprising:
- a determining module, which determines a decision section (E1, E2, E3) of the programme, wherein information influencing the further course of the programme is defined during execution of the programme, as a function of the current running state of the programme, and
- a converting module, which converts the decision section (E1, E2, E3) into code which is executable exclusively in the copy protection unit (2) and which is executed in the copy protection unit (2) during execution of the programme, and comprises a program instruction which, when being executed, causes the copy protection unit (2) to be called, including transfer of the data required for execution of the decision section (E1, E2, E3) and of a processing regulation, which is applicable to the data, to the copy protection unit (2).

9. A computer programme product comprising software code by which the steps of the method according to any one of method claims 1 to 7 are executed when the product is being executed on a computer.

## Revendications

1. Procédé d'extension d'un programme implémenté dans un ordinateur, destiné à être installé sur un système informatique (1) comportant une unité de protection contre la copie (2), le procédé comprenant les étapes suivantes
- déterminer une section de décision (E1, E2, E3) du programme, dans laquelle pendant l'exécution du programme, en fonction de l'état actuel de fonctionnement du programme, une information influençant le déroulement ultérieur du programme est déterminée, et
- conversion de la section de décision (E1, E2, E3) en un code uniquement exécutable dans l'unité de protection contre la copie (2), qui est exécuté lors de l'exécution du programme dans l'unité de protection contre la copie (2),
**caractérisé en ce que** on prévoit dans l'étape de conversion une instruction de programme qui lors de l'exécution initie une interrogation de l'unité de protection contre la copie (2) avec une transmission des données nécessaires pour l'exécution de la section de décision (E1, E2, E3) et d'une prescription de traitement applicable pour les données à l'unité de protection contre la copie (2).

2. Procédé selon la revendication 1, dans lequel lors de son exécution, le code initie une comparaison de deux valeurs de données (a, b) et en fonction du résultat de la comparaison, la détermination de l'information.

3. Procédé selon la revendication 1 ou 2, dans lequel l'information contient une adresse de programme à laquelle l'exécution du programme se poursuit.

4. Procédé selon l'une quelconque des revendications 1 à 3, dans lequel les données à transmettre (a, b) et la prescription de traitement à transmettre sont prévues sous forme cryptée dans le programme et sont transmises sous forme cryptée à l'unité de protection contre la copie (2), lors de l'exécution du programme.

5. Procédé selon l'une quelconque des revendications précédentes, dans lequel l'exécution du code dans l'unité de protection contre la copie (2) est exécutée de façon non visible pour le reste du système informatique (1).

6. Procédé selon l'une quelconque des revendications précédentes, dans lequel au cours de l'étape de détermination, la section de décision est déterminée dans le programme à l'aide de sa séquence d'instruction.

7. Procédé selon l'une quelconque des revendications précédentes, dans lequel l'étape de détermination et l'étape de conversion sont réalisées plusieurs fois, pour déterminer plusieurs sections de décision (E1, E2, E3) et sont assurées au moyen d'un code exclusivement exécutable dans l'unité de protection contre la copie (2), en cas de détermination de deux types identiques de sections de décision (E1, E2, E3), ces dernières étant converties par des codes différents dans les étapes de conversion.

8. Dispositif d'extension pour l'extension d'un programme destiné à être installé sur un système informatique (1) comportant une unité de protection contre la copie (2) avec une fonction de protection contre la copie, le dispositif comportant :
- un module de détermination déterminant une section de décision du programme (E1, E2, E3), dans laquelle pendant l'exécution du programme, en fonction de l'état actuel de fonctionnement du programme, une information influençant le déroulement ultérieur du programme est déterminée et
- un module de conversion qui transforme la section de décision (E1, E2, E3) déterminée en un code uniquement exécutable dans l'unité de protection contre la copie (2), qui est exécuté lors de l'exécution du programme dans l'unité de protection contre la copie (2), et qui comporte une instruction de programme, qui lors de l'exécution initie une interrogation de l'unité de protection contre la copie (2) avec une transmission des données nécessaires pour l'exécution de la section de décision (E1, E2, E3) et d'une prescription de traitement applicable pour les données à l'unité de protection contre la copie (2).

9. Produit de programme informatique comportant des codes logiciels, pour réaliser les étapes des revendications 1 à 7 concernant le procédé, lorsque le produit est exécuté sur un ordinateur.
